# EUROPEAN PATENT APPLICATION

(11) **EP 3 723 399 A1**
(43) Date of publication of application: **14.10.2020**
(21) Application number: 18885271.9
(22) Date of filing: 11.10.2018
(51) Int. Cl.: H04W 4/80, H04W 12/02

(54) **IDENTITY VERIFICATION METHOD AND APPARATUS**

(30) Priority: 08.12.2017 CN 201711305665
(71) Applicant: Xi'an Zhongxing New Software Co., Ltd., Xi'an, Shaanxi 710114 (CN)
(72) Inventor: ZHAO, Ming, Shaanxi 710114 (CN)
(74) Representative: Baudler, Ron
(86) International application number: PCT/CN2018/109852
(87) International publication number: WO 2019/109727

(57) **Abstract**

Provided are an identity verification method and apparatus. The method comprises: establishing a binding relationship with a vehicle terminal by using a near-field communication technique; and requesting the vehicle terminal to perform identity verification on a handheld terminal by using a symmetric key, wherein the binding relationship is that the vehicle terminal corresponds to the handheld terminal on a one-to-one basis.

## Description

### CROSS REFERENCE TO RELATED APPLICATIONS

The present application is filed based on the Chinese patent application No. 201711305665.3 filed on December 8. 2017 and claims priority thereof, the content of which is incorporated herein by reference in its entirety.

### TECHNICAL FIELD

The present disclosure relates to the field of communication, and in particular, to an identity authentication method and device.

### BACKGROUND

In related art, with rapid development of 3G/4G network for communication, more and more on-vehicle terminal devices are integrated with wireless communication modules, and such on-vehicle terminal devices are increasingly needed to serve as control center of a whole in-vehicle network. An extension of such control is also increasing, and in addition to control of in-vehicle apparatuses, the on-vehicle terminal devices are further needed to serve as network channels and control hubs of mobile terminals of in-vehicle passengers, which makes an application range of the in-vehicle terminal devices wider and wider. Vehicle manufacturers desire that the on-vehicle terminal devices provide not only basic communication functions but also vehicle control functions including remote opening/closing of doors, windows, and the like.

### SUMMARY

Embodiments of the present disclosure provides an identity authentication method and device to at least solve a technical problem of low security when an on-vehicle terminal authenticates a handheld terminal in the related art.

According to an embodiment, provided is an identity authentication method, including: establishing a binding relationship with an on-vehicle terminal by using a near field communication (NFC) technology; and requesting the on-vehicle terminal to perform identity authentication on a handheld terminal by using a symmetric key, where the binding relationship indicates that the on-vehicle terminal corresponds to the handheld terminal in a one-to-one relationship.

According to another embodiment of the present disclosure, provided is another identity authentication method applying to an on-vehicle terminal and including: establishing a binding relationship with a handheld terminal by using a NFC technology; and performing identity authentication on the handheld terminal by using a symmetric key, where the binding relationship indicates that the on-vehicle terminal corresponds to the handheld terminal in a one-to-one relationship.

According to another embodiment of the present disclosure, provided is another identity authentication method including: receiving registration information from a handheld terminal; generating a symmetric key according to the registration information; and sending the symmetric key to an on-vehicle terminal, where the symmetric key is used for the on-vehicle terminal to perform identity authentication on the handheld terminal.

According to another embodiment of the present disclosure, provided is an identity authentication device including: an establishing module configured to establish a binding relationship with an on-vehicle terminal by using a NFC technology; and a requesting module configured to request the on-vehicle terminal to perform identity authentication on a handheld terminal by using a symmetric key, where the binding relationship indicates that the on-vehicle terminal corresponds to the handheld terminal in a one-to-one relationship.

According to another embodiment of the present disclosure, provided is an identity authentication device including: an establishing module configured to establish a binding relationship with a handheld terminal by using a NFC technology; and an authenticating module configured to perform identity authentication on the handheld terminal by using a symmetric key, where the binding relationship indicates that the on-vehicle terminal corresponds to the handheld terminal in a one-to-one relationship.

According to another embodiment of the present disclosure, provided is an identity authentication device including: a receiving module configured to receive registration information from a handheld terminal; a generating module configured to generate a symmetric key according to the registration information; and a sending module configured to send the symmetric key to an on-vehicle terminal, where the symmetric key is used for the on-vehicle terminal to perform identity authentication on the handheld terminal.

According to another embodiment of the present disclosure, provided is a storage medium including a stored program, where the program, when executed by a processor, cause the processor to perform any one of the above method.

According to another embodiment of the present disclosure, a processor is provided, the processor is configured to execute a program, where the program, when executed by the processor, cause the processor to perform any one of the above method.

According to the present disclosure, a security problem that a plurality of on-vehicle terminals are influenced by hacking one handheld terminal is solved by establishing a one-to-one binding relationship between the on-vehicle terminal and the handheld terminal, and the security is further improved by using a symmetric key to perform identity authentication, and a technical problem of low security when the on-vehicle terminal performs identity authentication on the handheld terminals in related art is solved.

### BRIEF DESCRIPTION OF THE DRAWINGS

The accompanying drawings are provided to assist in understanding the present disclosure and constitute a part of the present application, and exemplary embodiments of the present disclosure and their description are intended to explain the present disclosure and do not constitute a limitation to the present disclosure. In the accompanying drawings:
FIG. 1 is a flowchart of an identity authentication method according to an embodiment of the present disclosure;
FIG. 2 is a diagram showing interactions performed when identity authentication is performed between a handheld terminal and an on-vehicle terminal according to an embodiment;
FIG. 3 is a flowchart of another identity authentication method according to an embodiment of the present disclosure;
FIG. 4 is a flowchart of another identity authentication method according to an embodiment of the present disclosure;
FIG. 5 is a structural block diagram of an identity authentication device according to an embodiment of the present disclosure;
FIG. 6 is a structural block diagram of another identity authentication device according to an embodiment of the present disclosure;
FIG. 7 is a structural block diagram of another identity authentication device according to an embodiment of the present disclosure;
FIG. 8 is a flow chart illustrating a process of registering and authenticating a handheld terminal and a dynamic password generating process according to an embodiment of the disclosure;
FIG. 9 is a flowchart illustrating a process of registering and authenticating a handheld terminal and a plaintext/ciphertext checking process according to an embodiment of the disclosure;
FIG. 10 is a flowchart illustrating that a handheld terminal uses a dynamic password to control an on-vehicle according to an embodiment of the disclosure; and
FIG. 11 is a flowchart illustrating that a handheld terminal uses a plaintext/ciphertext check mechanism to control an on-vehicle according to an embodiment of the disclosure.

### DETAILED DESCRIPTION

The present disclosure will be described in detail below with reference to the accompanying drawings in conjunction with embodiments. It should be noted that, in the embodiments the present application and features of the embodiments may be combined with each other without conflict.

It should be noted that terms "first", "second" and the like in the description and claims of the present disclosure and in the accompanying drawings are used for distinguishing between similar elements and not necessarily for describing a particular sequence or order.

In related art, an on-vehicle terminal provides a vehicle control function including a function of remotely opening/closing vehicle doors and vehicle windows, an implementation scheme of the function includes following two kinds.

### A. a cloud-based virtual key function

The scheme A requires an application (APP) in a mobile phone to communicate with a cloud server in real time to acquire various authorities of a vehicle to be controlled, the APP sends a control instruction to the cloud server, and then the server sends the instruction to an on-vehicle terminal to achieve a purpose of a virtual key.

### B. a local point-to-point communication technology-based virtual key function

The scheme B has various implementations, for example, the schemes based on Bluetooth technology, NFC technology, Zigbee technology, subG technology, and the like. A main difference among the schemes is different underlying link technology. In terms of an application range, the schemes based on NFC, Zigbee and subG all require relevant built-in physical chips at a side of the mobile phone, thus the application range of these schemes is narrow. In the scheme based on Bluetooth, since Bluetooth function is standard on smart phones, the application range thereof is wider.

However, disadvantages of these two kinds of implementation schemes are obvious. A main disadvantage of the cloud-based scheme is that it relies heavily on a mobile network, such as in a field of an internet of vehicles product TBOX developed in vehicles or a field of sharing vehicles (bicycles, electric vehicles), i.e., time-sharing leasing. Once a vehicle got in an area with poor network coverage, such as an underground garage, a suburban or mountain parking lot, because the APP cannot normally connect with the cloud server, the whole virtual key function is disabled. A main disadvantage of the local point-to-point communication technology-based scheme lies in wide use and security. The scheme based on Bluetooth are most widely used, but storage for keys of point-to-point communication instructions is a difficult problem. Security architecture of existing smart phones does not allow an APP to legally access a bottom-layer secure storage area, so that keys may be copied, and an on-vehicle terminal may be controlled by an illegal handheld terminal.

In addition to the above security problem, the schemes respectively based on NFC technology, Zigbee technology, SubG technology and the like still face a problem that a plurality of handheld terminals are not integrated with NFC chips, Zigbee chips or the like, therefore the application range of the schemes is narrow.

Network architecture applied in an embodiment of the present disclosure includes an on-vehicle terminal, a handheld terminal and a server, the on-vehicle terminal, the handheld terminal and the server are connected with one another to perform information interaction.

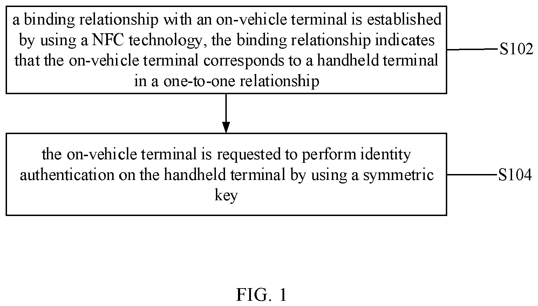

In the embodiment, an identity authentication method operating in the above network architecture is provided. FIG. 1 is a flowchart of an identity authentication method according to an embodiment of the present disclosure. As shown in FIG. 1, the flowchart includes the following steps S 102 to S104.

In step S102, a binding relationship with an on-vehicle terminal is established by using a NFC technology, the binding relationship indicates that the on-vehicle terminal corresponds to the handheld terminal in a one-to-one relationship.

In step S104, the on-vehicle terminal is requested to perform identity authentication on a handheld terminal by using a symmetric key.

Through the above steps, a problem that security of a plurality of on-vehicle terminals are influenced by hacking the handheld terminal is solved by establishing the one-to-one corresponding binding relationship between the on-vehicle terminal and the handheld terminal, and the security is further improved by using the symmetric key for the identity authentication, thus a technical problem of low security when the on-vehicle terminal authenticates the handheld terminal in the related art is solved.

Optionally, an executive body of the above steps may be the handheld terminal, such as a mobile phone, a wearable apparatus, and the like, but is not limited thereto.

Registration information may be an account number, a login password, a terminal number, a user mobile phone number and the like. A symmetric key algorithm may be, but is not limited to, Data Encryption Standard (DES), 3DES, Advanced Encryption Standard (AES) 128, and the like.

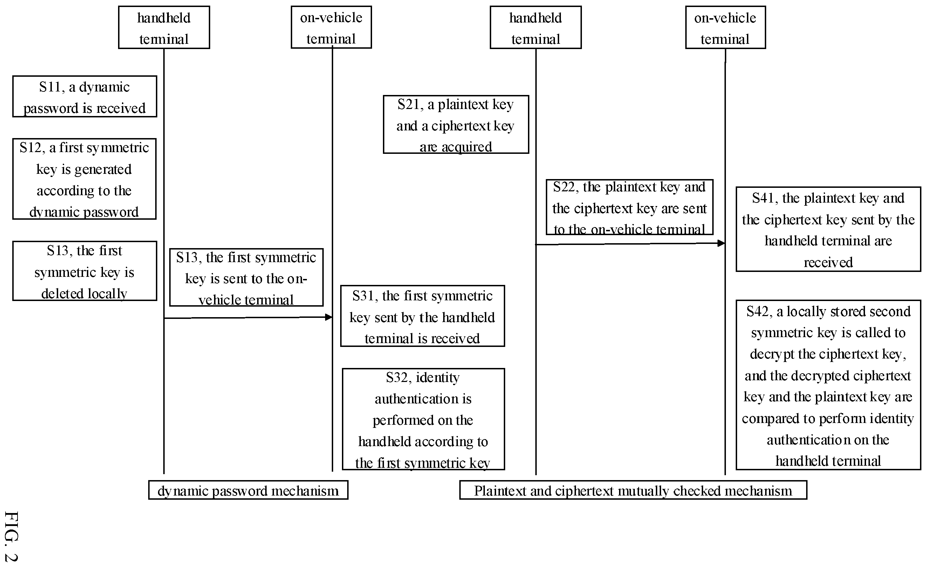

Optionally, the step of requesting the on-vehicle terminal to perform identity authentication on the handheld terminal by using the symmetric key includes two mechanisms. FIG. 2 is a diagram showing interactions performed when identity authentication is performed between the handheld terminal and the on-vehicle terminal in the embodiment. The interaction performed between the handheld terminal and the on-vehicle terminal includes two mechanisms, that is, a dynamic password mechanism and a plaintext and ciphertext mutually checked mechanism.

The dynamic password mechanism may include steps S11 to S13.

In step S11, a dynamic password is received.

In step S12, a first symmetric key is generated according to the dynamic password.

In step S13, the first symmetric key is sent to the on-vehicle terminal, and the first symmetric key is deleted locally, the first symmetric key is used for the on-vehicle terminal to perform identity authentication on the handheld terminal.

The plaintext and ciphertext mutually checked mechanism may include steps S21 to S22.

In step S21, a plaintext key and a ciphertext key are acquired.

In step S22, the plaintext key and the ciphertext key are sent to the on-vehicle terminal.

The plaintext key and the ciphertext key are used for the on-vehicle terminal to perform identity authentication on the handheld terminal by using a second symmetric key, and the on-vehicle terminal stores the second symmetric key and decryption manners of the ciphertext key.

Optionally, before the step of requesting the on-vehicle terminal to establish the binding relationship with the on-vehicle terminal by using the NFC technology, the method further includes: sending the registration information to a cloud server through a cellular network; and receiving the ciphertext key sent by the cloud server. As long as the cellular network is used during a first registration, after the registration is successful, subsequent interactions with the on-vehicle terminal may use the NFC technology instead of the cellular network, so that traffic may be saved.

Optionally, after the step of requesting the on-vehicle terminal to perform identity authentication on the handheld terminal by using the symmetric key, the method further includes: sending a control instruction to the on-vehicle terminal after the identity authentication is successful.

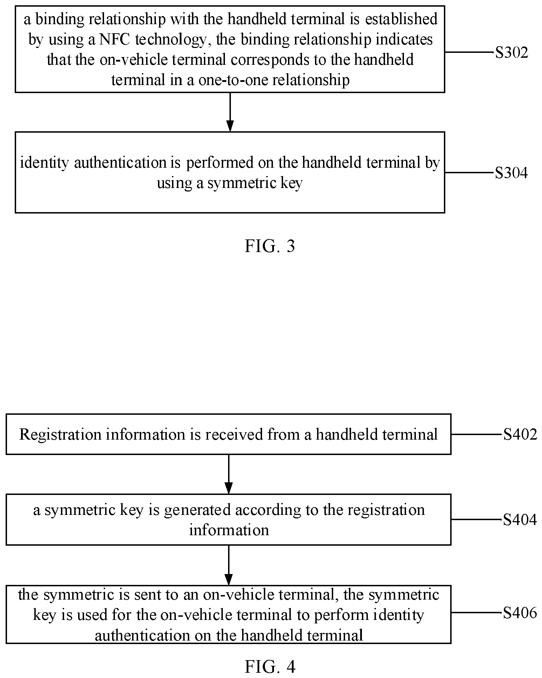

In the embodiment, another identity authentication method operating in the above network architecture is provided. FIG. 3 is a flowchart of another identity authentication method applied to the on-vehicle terminal according to an embodiment of the present disclosure. As shown in FIG. 3, the flowchart includes the following steps S302 to S304.

In step S302, a binding relationship with the handheld terminal is established by using a NFC technology.

In step S304, identity authentication is performed on the handheld terminal by using a symmetric key.

The binding relationship indicates that the on-vehicle terminal corresponds to the handheld terminal in a one-to-one relationship.

Optionally, an executive body of the above steps may be the on-vehicle terminal, such as a TBOX and the like, but is not limited thereto.

Registration information may be an account number, a login password, a terminal number, a user mobile phone number, a MAC address for Bluetooth, an equipment fingerprint, and the like. A symmetric key algorithm may include, but is not limited to, DES, 3DES, AES128, and the like.

The step of performing identity authentication on the handheld terminal by using the symmetric key includes two authentication mechanisms. Interaction performed between the handheld terminal and the on-vehicle terminal includes two mechanisms, as shown in FIG. 2, that is, a dynamic password mechanism and a plaintext and ciphertext mutually checked mechanism.

The dynamic password mechanism may include steps S31 to S32.

In step S31, a first symmetric key sent by the handheld terminal is received.

In step S32, identity authentication is performed on the handheld terminal according to the first symmetric key.

The plaintext and ciphertext mutually checked mechanism may include steps S41 to S42.

In step S41, a plaintext key and a ciphertext key sent by the handheld terminal are received.

In step S42, a locally stored second symmetric key is called to decrypt the ciphertext key, and the decrypted ciphertext key and the plaintext key are compared to perform identity authentication on the handheld terminal.

Optionally, after the step of performing identity authentication on the handheld terminal by using the symmetric key, the method further includes: controlling a vehicle where the on-vehicle terminal is positioned by using a control instruction sent by the handheld terminal after the identity authentication is successful.

Optionally, before the step of performing identity authentication on the handheld terminal by using the symmetric key, the method further includes: receiving the symmetric key sent by a cloud server.

In the embodiment, an identity authentication method operating in the above network architecture is provided. FIG. 4 is a flowchart of another identity authentication method according to an embodiment of the present disclosure. As shown in FIG. 4, the flowchart includes the following steps S402 to S406.

In step S402, registration information is received from a handheld terminal.

In step S404, a symmetric key is generated according to the registration information.

In step S406, the symmetric key is sent to an on-vehicle terminal.

The symmetric key is used for the on-vehicle terminal to perform identity authentication on the handheld terminal.

Optionally, an executive body of the above steps may be a server and the like, but is not limited thereto.

The registration information may be an account number, a login password, a terminal number, a user mobile phone number, a MAC address for Bluetooth, an equipment fingerprint, and the like. A symmetric key algorithm may include, but is not limited to, DES, 3DES, AES128, and the like.

Optionally, after the step of receiving the registration information of the handheld terminal, the method further includes: generating a ciphertext key according to the registration information; and sending the ciphertext key to the handheld terminal.

Through the description of the above embodiment, it is clear to those skilled in the art that the methods according to the above embodiment may be implemented by software and a necessary general hardware platform, and certainly may also be implemented by hardware, but the former is a better implementation mode in many cases. Based on such understanding, the technical solutions of the present disclosure or parts of contributing to the related art may be embodied in a form of a software product, which is stored in a storage medium (such as a ROM/RAM, a magnetic disk, and an optical disk) and includes several instructions for enabling a terminal device (which may be a mobile phone, a computer, a server, or a network device) to execute the methods according to the embodiment of the present disclosure.

In another exemplary embodiment, an identity authentication device is further provided, which is configured to implement the above embodiment, and details are not repeated for what has been described. As used below, a term "module" may be a combination of software and/or hardware that implements predetermined functions. Although devices described in the following embodiment may be implemented in software, an implementation in hardware or a combination of software and hardware is also possible and contemplated.

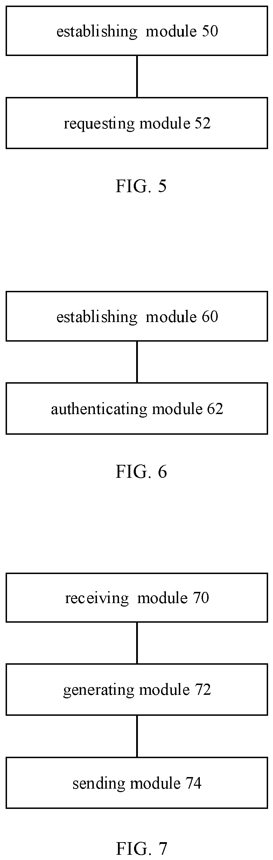

FIG. 5 is a structural block diagram of an identity authentication device according to an embodiment of the present disclosure. As shown in FIG. 5, the device includes an establishing module 50 and a requesting module 52.

The establishing module 50 is configured to establish a binding relationship with an on-vehicle terminal by using a NFC technology.

The requesting module 52 is configured to request the on-vehicle terminal to perform identity authentication on a handheld terminal by using a symmetric key.

The binding relationship indicates that the on-vehicle terminal corresponds to the handheld terminal in a one-to-one relationship.

FIG. 6 is a structural block diagram of another identity authentication device which is applied to an on-vehicle terminal according to an embodiment of the disclosure. As shown in FIG. 6, the device includes an establishing module 60 and an authenticating module 62.

The establishing module 60 is configured to establish a binding relationship with a handheld terminal by using a NFC technology.

The authenticating module 62 is configured to perform identity authentication on the handheld terminal by using a symmetric key.

The binding relationship indicates that the on-vehicle terminal corresponds to the handheld terminal in a one-to-one relationship.

FIG. 7 is a structural block diagram of another identity authentication device according to an embodiment of the disclosure. As shown in FIG. 7, the device includes a receiving module 70, a generating module 72 and a sending module 74.

The receiving module 70 is configured to receive registration information from a handheld terminal.

The generating module 72 is configured to generate a symmetric key according to the registration information.

The sending module 74 is configured to send the symmetric key to an on-vehicle terminal.

The symmetric key is configured to be used for the on-vehicle terminal to perform identity authentication on the handheld terminal.

An embodiment of the present disclosure further provides a system including the devices included in FIGs. 5-7.

It should be noted that the above modules may be implemented by software or hardware, and the hardware may be implemented by positioning all the modules in a same processor, or positioning any combinations of the modules in different processors, respectively.

In an optional embodiment, as for a limitation that a wireless network must be depended on and security is low, a virtual key solution based on a dynamic password is provided, so that uniqueness of identity authentication is realized, and confidentiality of the identity authentication is improved.

The uniqueness indicates that an APP (application program) of an on-vehicle terminal and a handheld terminal are ensured to have a one-to-one corresponding relationship by a Public Key Infrastructure (PKI) architecture. That is, an APP of one certain handheld terminal can only control one certain on-vehicle terminal instead of a plurality of on-vehicle terminals, so that a case may be avoided that all relevant on-vehicle terminals are hacked once the APP of the certain handheld terminal is hacked.

The confidentiality indicates that when an APP of a handheld terminal and an on-vehicle terminal are in point-to-point communication, all control instructions are encrypted based on a symmetric key, but the symmetric key is only stored in the on-vehicle terminal and the APP of the handheld terminal does not store the symmetric key.

There are two schemes for implementing the confidentiality: a dynamic password generating scheme and a plaintext and ciphertext mutually checked mechanism. The following is a detailed description.

A principle for realizing the dynamic password generating scheme is that a user inputs a password manually to dynamically generate a symmetric key, and once the symmetric key is used, the symmetric key is deleted immediately. The handheld terminal does not have any information about the symmetric key locally. The scheme solves a problem in similar solutions that the key is easily stolen by an attacker by adopting technologies (such as mirroring copy and the like) when the key is stored locally in the handheld terminal. Thus, security of the whole scheme is effectively improved.

A principle for realizing the plaintext and ciphertext mutually checked mechanism is that a virtual key consists of a plaintext part and a ciphertext part. Management and generation of the ciphertext are performed on a cloud server, a user's mobile phone cannot decrypt the ciphertext, and only the on-vehicle terminal can decrypt the ciphertext. When a user is registering, the user submits information about the current terminal and the user (such as a MAC address for Bluetooth, an equipment fingerprint and the like), and the cloud server randomly extracts a part of the information to encrypt and generate a user identification code as a ciphertext, returns the ciphertext to the user's mobile phone, and returns an encryption manner and a symmetric key to the on-vehicle terminal. When the user wants to use the mobile phone to control a vehicle, a message of a plaintext together with the ciphertext is sent to the on-vehicle terminal, the plaintext is information about the current terminal and the user and includes an equipment fingerprint, a verification code, a MAC address for Bluetooth, a terminal number and the like, and the ciphertext is a portion of the virtual key returned by the cloud server. After receiving information of the plaintext and the ciphertext, the on-vehicle terminal firstly decrypts the ciphertext, reads the information about the terminal and the user in the ciphertext, then compares the information about the terminal and the user with information contained in the plaintext, determines that the mobile phone is a legal terminal if the information of the terminal and the user is consistent with the information contained in the plaintext, and allows executions of relevant vehicle control instructions.

According to the present disclosure, the dynamic password generating scheme and the plaintext and ciphertext mutually checked mechanism are two technical schemes independent from each other for realizing the confidentiality. Main differences are as follows.

In the dynamic password generating scheme, a core concept is transmitting the symmetric key, but the key being not stored in the user's mobile phone. The symmetric key is generated by a brain of the user, and then is forwarded to the on-vehicle terminal through the mobile phone for identity authentication.

In the plaintext and ciphertext mutually checked mechanism, a core concept is no keys being transmitted, but only transmitting the plaintext and the ciphertext generated by encrypting the plaintext. After receiving the plaintext and the ciphertext, the on-vehicle terminal decrypts the ciphertext by using a symmetric key obtained from a server in advance, compares relevant information in the decrypted ciphertext with the plaintext, and determines that the mobile phone is legal if the relevant information in the decrypted ciphertext is consistent with plaintext.

By using this new method, a virtual key function of a vehicle has the following advantages to improve user experience.

Firstly, the handheld terminal does not locally store any key, so that a stealing risk of the key is greatly reduced.

Secondly, after the uniqueness is completed through bidirectional authentication between the handheld terminal and the on-vehicle terminal, the virtual key function may be realized without a mobile communication network, and an application range of the virtual key function is greatly expanded.

Therefore, the embodiment has great improvement on the usability and stability of products and user experience.

The embodiment has two core processes including a process of performing bidirectional authentication between the APP of the handheld terminal and the on-vehicle terminal and a process of interacting control instructions between the APP of the handheld terminal and the on-vehicle terminal.

For the process of performing the bidirectional authentication, the on-vehicle terminal and the handheld terminal are need to be connected to the cloud server. The server generates a key pair of asymmetric keys (a public key and a private key), sends the public key to the APP of the handheld terminal and sends the private key to the on-vehicle terminal, through the PKI technology of the cloud server.

For the process of interacting the control instructions, the mobile communication network does not need. The APP of the handheld terminal and the on-vehicle terminal establish physical connection through BT, NFC and other bottom link technologies, and then encrypted transmission of the control instructions is realized.

In the embodiment, an entire system is composed of three major components including the on-vehicle terminal, the handheld terminal and the cloud server. Each component includes a plurality of modules. Through the modules and based on cooperation of the three major components, a virtual key scheme based on a dynamic password can be realized.

Constitution of each component and function of each module are described below.

### On-vehicle terminal

The on-vehicle terminal generally refers to a front-end product embedded in a vehicle, has a wireless communication function, and commonly includes a TBOX, a vehicle machine, an in-vehicle gateway and the like. The component includes four service modules: an encryption storage module, a handheld terminal authentication module, a vehicle control module and a self-defined symmetric key decryption module.

The encryption storage module: the on-vehicle terminal is internally provided with a high-reliability encryption storage area providing secure storage function of keys and certificates and internally set with various mainstream encryption algorithm engines. Private key information of an asymmetric key and symmetric key information of the handheld terminal are mainly stored in the encryption storage module in the present disclosure.

The handheld terminal authentication module is configured for the on-vehicle terminal to perform identity authentication on the handheld terminal, and a main purpose thereof is to ensure the uniqueness, that is, one certain handheld terminal or several certain handheld terminals can only control one certain on-vehicle terminal, thus, even if the handheld terminal is hacked, serious result that a plurality of on-vehicle terminals are illegally controlled can be avoided. The authentication module uses a private key of the handheld terminal stored in the internal secure area to decrypt an authentication message sent by the handheld terminal, and confirms that the handheld terminal is an authenticated terminal and allows subsequent control function if the decryption is successful.

The vehicle control module is configured to receive a control instruction of the handheld terminal. The vehicle control module calls the symmetric key decryption module to decrypt the received instruction, and in response to that the instruction is a legal instruction, issues the instruction to other ECUs to complete a function such as opening/closing vehicle doors/windows, starting an engine, and the like.

The self-defined symmetric key decryption module is configured to decrypt an encrypted control instruction sent by the handheld terminal. The self-defined symmetric key decryption module uses symmetric key information generated by a password to decrypt the control instruction through a self-defined iterative symmetric key algorithm. The symmetric key algorithm includes, but is not limited to, Data Encryption Standard (DES), 3DES, Advanced Encryption Standard (AES) 128, and the like.

### Cloud server

The cloud server is configured to perform authentication on the handheld terminal for the first time. When the handheld terminal installs a relevant APP for the first time, bidirectional authentication needs to be performed through the cloud server, that is, the server and the on-vehicle terminal need to authenticate the handheld terminal, and the handheld terminal also needs to authenticate the on-vehicle terminal. The component includes an asymmetric key generating module, an asymmetric key issuing module, a terminal bidirectional authentication module, and a symmetric key forwarding module.

The asymmetric key generating module is configured to generate an asymmetric key pair for the server and an asymmetric key pair for the on-vehicle terminal. The key pair is a set of keys including a public key and a private key. The public key is used for encryption, and the private key is used for decryption. In order to enhance security, the public keys are added with digital signatures to form a server certificate and an on-vehicle terminal certificate.

The asymmetric key issuing module is configured to send the generated on-vehicle terminal certificate and the server certificate to the handheld terminal, and send the private key for the on-vehicle terminal to the on-vehicle terminal. The server locally stores the private key for the server.

The terminal bidirectional authentication module: the bidirectional authentication is that the handheld terminal needs to authenticate the server and the on-vehicle terminal, and conversely, the on-vehicle terminal also needs to authenticate the handheld terminal. An authentication process may include: the handheld terminal decides whether the server certificate and the on-vehicle terminal certificate issued by the server are legal through a built-in ROOT CA and a multi-stage certificate chain, and if the server certificate and the on-vehicle terminal certificate are legal, the handheld terminal authenticates the server and the on-vehicle terminal successfully. Authentication on the handheld terminal by the on-vehicle terminal is decided according to an authentication process initiated by the handheld terminal, once a message encrypted by the handheld terminal using the on-vehicle terminal certificate is decrypted and relevant handheld terminal information contained in the decrypted message is consistent with handheld terminal information stored in the on-vehicle terminal, authentication on the handheld terminal by the on-vehicle terminal is successful.

The symmetric key forwarding module is configured to forward a symmetric key generated by the handheld terminal according to a dynamic password to the on-vehicle terminal for local storage. The symmetric key is used in a subsequent process of controlling the on-vehicle terminal by the handheld terminal.

### Handheld terminal

The hand-held terminal generally refers to a smart phone, and the implementation scheme in the present disclosure requires that an application program (APP) is installed on the handheld terminal. The application program includes an on-vehicle terminal authentication module, a dynamic password inputting and processing module, a self-defined symmetric key encryption module, and a vehicle control instruction processing module.

The on-vehicle terminal authentication module may only work when the APP is registered for the first time, and a main function of the on-vehicle terminal authentication module is to initiate a registration and authentication process to a cloud server and an on-vehicle terminal when the handheld terminal is connected to the server for the first time. The process finally sends specific information of the handheld terminal, such as information of a mobile phone number, MAC address, IMSI and the like to the server, and meanwhile receives a server certificate and an on-vehicle terminal certificate issued by the server. These certificates are stored locally.

The dynamic password inputting and processing module has a main purpose of achieving another core point of the present disclosure, that is, confidentiality. Due to a characteristic of a symmetric key (a key in a receiving party is the same as a key in a sending party), and operation speed being far higher than that of an asymmetric key, only the symmetric key may be used for encrypting an actual control instruction of the handheld terminal. However, storage of the symmetric key is difficult, and once the symmetric key is store locally in the handheld terminal, the symmetric key faces a risk of being stolen. Actually, original information of the symmetric key is stored in a brain of a user, the dynamic password inputting and processing module calls the self-defined symmetric key encryption module to generate the symmetric key after the user inputs a password.

The self-defined symmetric key encryption module is configured to use the symmetric key generated according to the password to encrypt a control instruction through a self-defined iterative symmetric key algorithm. The symmetric key algorithms include, but are not limited to, DES, 3DES, AES128, and the like. The self-defined symmetric key encryption module corresponds to the decryption module in the on-vehicle terminal.

The vehicle control instruction processing module is configured to use the symmetric key generated according to the password to encrypt the control instruction, and then send the encrypted control instruction to the on-vehicle terminal to achieve a purpose of directly controlling the on-vehicle terminal by using the handheld terminal.

The scheme of the embodiment includes two parts of implementation mechanisms, that is, uniqueness and confidentiality.

The uniqueness indicates that the handheld terminal and the on-vehicle terminal has a unique matching relationship, and even if the handheld terminal is hacked, the number of affected on-vehicle terminals is only one, so that a potential security problem for affecting a batch of on-vehicle terminals can be avoided. The uniqueness is ensured by bidirectional authentication.

The confidentiality indicates that a control instruction sent by the handheld terminal to the on-vehicle terminal is encrypted by a symmetric key generated according to a dynamic password, the symmetric key may not be stored locally in the handheld terminal, and a possibility of being stolen by reverse engineering is very low.

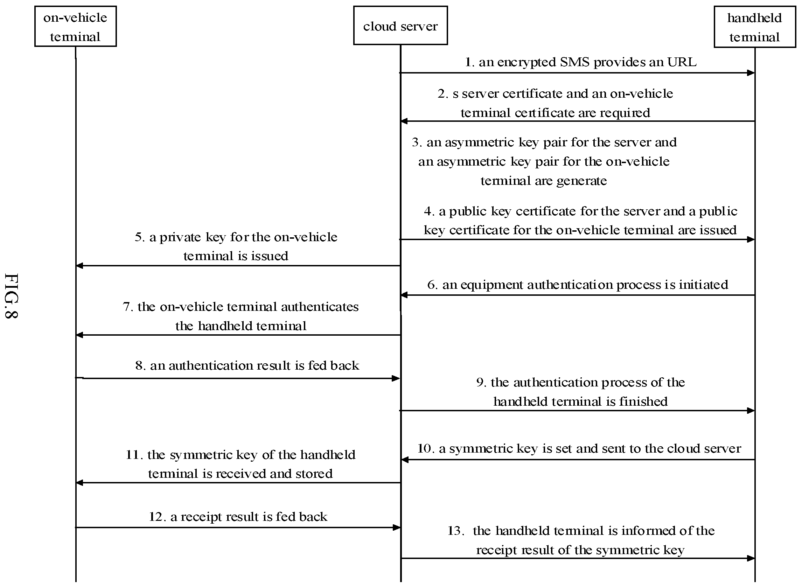

FIG. 8 is a flowchart illustrating a process of registering and authenticating a handheld terminal and a dynamic password generation process according to an embodiment of the disclosure. The process illustrated in FIG. 8 implements bidirectional authentication between two peer terminals. Authentication technology is generally used between a network client and a server, and even if the authentication technology is used in the field of terminals, it is used between a terminal and the server. In this kind of authentication manner, two authentication parties are divided into a master and a slave, that is, the terminal is the slave and the server is the master. Since the server needs to face massive clients/terminals, in the related art, unidirectional authentication is performed, that is, the terminal authenticates the server, and there is no a scenario that two terminals authenticate each other. Innovation of the present disclosure is that the two authentication parties are not divided into the master and the slave and are peer roles. Meanwhile, a bidirectional authentication mechanism is creatively introduced, that is, after a mobile phone terminal authenticates an on-vehicle terminal, the on-vehicle terminal also needs to authenticate the mobile phone terminal. In an implementation of the present disclosure, a server is only an intermediate transition role of a whole bidirectional authentication process, and therefore, both implementation principle and implementation mechanism are fundamentally different from existing authentication technology. The process shown in FIG. 8 includes steps 1 to 13.

In step 1, an encrypted short message service (SMS) provides a Uniform Resource Locator (URL). A handheld terminal makes an authentication request through a voice call or an agent. A cloud server sends the encrypted SMS to a mobile phone number of the handheld terminal, and the SMS contains a temporary URL of the cloud server.

In an implementation of the authentication request, if the authentication request is made by the voice call, a user needs to report vehicle information, personal identity information, and other private independent personal information reserved in a car factory or 4S store by voice. If the authentication request is made by the agent, the agent, which is typically a seller of a vehicle, will also provide the above information.

A process of sending the encrypted SMS to the handheld terminal by the server is an essential step in making the authentication request. Since the server address to which the handheld terminal to be connected is provided, the process is an important step in the process of authentication request.

In step 2, a server certificate and an on-vehicle terminal certificate are required. The handheld terminal uses the decrypted URL as a temporary link and sends a request for the server certificate and the on-vehicle terminal certificate to the cloud server. The request may carry uniqueness information of the handheld terminal, the uniqueness information includes but is not limited to, a mobile phone number, IMSI, MAC address, device fingerprint, and the like.

The decrypted URL is generated by decrypting the encrypted SMS issued by the cloud server. An encryption process of the SMS is completed in the cloud server.

Connection to the cloud server established by using the temporary link is realized by a TLS connection, but is different from a final bidirectional authentication connection between the on-vehicle terminal and the handheld terminal (from the on-vehicle terminal to the handheld terminal and from the handheld terminal to the on-vehicle terminal), the connection to the cloud server is unidirectional authentication, only the cloud server is authenticated to establish secure connection, and this process is completed by using a root certificate built in the handheld terminal.

In step 3, an asymmetric key pair for the server and an asymmetric key pair for the on-vehicle terminal are generated. The server generates the asymmetric key pair for the server and the asymmetric key pair for the on-vehicle terminal according to the unique information sent by the handheld terminal. Algorithm employed includes, but is not limited to, RSA. In this step, existing mature asymmetric password generation technology is utilized, and since the technology is a public and mature algorithm, a possibility of being cracked does not exist at present, and compared with a private key generation algorithm adopted in some schemes, security degree is higher. Once a bug appears, time for bug repair is far shorter than that of the private algorithm.

The unique information here includes, but is not limited to, country/area code, car model, year, ECU type/address, VIN, etc.

In step 4, a public key certificate for the server and a public key certificate for the on-vehicle terminal are issued. The cloud server issues the public key certificate for the server and the public key certificate for the on-vehicle terminal to the handheld terminal through an SSL secure link. The handheld terminal uses a built-in root certificate for the server, a built-in root certificate for the on-vehicle terminal, and a multi-level certificate chain to check legality of the certificates level by level after receiving the certificates, and stores the two certificates locally if the certificates are decided to be legal.

Level-by-level checking technology of the multi-level certificate chain is generally used for checking between a browser and a server, and the present disclosure uses the technology in the field of the handheld terminal.

The multi-level certificate chain technology is a security protection mechanism adopted to prevent a final certificate inside the handheld terminal from being forged/falsified. An implementation principle is that the checking is carried out level by level from a root certificate provided by a certificate authority, and a vehicle factory certificate, the server certificate and the on-vehicle terminal certificate are verified in sequence, so that a purpose of checking security and reliability of the on-vehicle terminal certificate is achieved. The certificate includes a public key and a digital signature. The digital signature is generated by a private key of an upper-level certification authority. In the multi-level certificate checking, the first level certificate uses the root certificate, and from the second certificate, a public key in a certificate of the last level is used to check a digital signature in a certificate of the current level, a public key in the certificate of the current level is obtained if the checking is successful, and the public key in the certificate of the current level is used for checking a digital signature in a certificate of the next level, and so on, a multi-level certificate checking process is completed.

In step 5, a private key for the on-vehicle terminal is issued. The cloud server issues the private key for the on-vehicle terminal to the on-vehicle terminal, and the on-vehicle terminal receives the private key and stores the private key in a local secure storage area.

In step 6, an equipment authentication process is initiated. The handheld terminal initiates the equipment authentication process to the cloud server. An authentication request is encrypted by using the on-vehicle terminal certificate and then encrypted by using the server certificate.

In step 7, the on-vehicle terminal authenticates the handheld terminal. The cloud server firstly uses a private key for the server to decide whether the message is sent by a legal handheld terminal after receiving the authentication request. The server sends the message after a first decryption to the on-vehicle terminal if it is determined that the message is sent by the legal handheld terminal.

In step 8, an authentication result is fed back. The on-vehicle terminal decides whether the message is sent by a legal authenticated terminal by using its own private key, and if the message is sent by the legal authenticated terminal, the on-vehicle terminal feeds back the authentication result to the server.

In step 9, the authentication process of the handheld terminal is finished. The server forwards the authentication result of the on-vehicle terminal to the handheld terminal to complete the whole authentication process.

### Dynamic password generation scheme

In step 10, a symmetric key is sent to the cloud server after the symmetric key is set. The handheld terminal initiates a first dynamic password generation operation, and sends the generated password as a symmetric key to the cloud server. At the same time, the dynamic password is not stored locally at the handheld terminal. The generation of the dynamic password means that an APP of the handheld terminal pops up a dialog box and requires a user to input dynamic password by using a secure keyboard. The password needs to be a combination of letters and numbers, and after the user inputs the password, the APP sends the password to the cloud server through a TLS secure encryption channel. The password is guaranteed not to be leaked at the handheld terminal to a maximum extent. Herein, the secure keyboard refers to a self-drawing random keyboard of the APP, and does not use a keyboard of a default input manner of the handheld terminal.

In step 11, the symmetric key of the handheld terminal is received and stored. The cloud server sends the symmetric key generated by the dynamic password to the on-vehicle terminal, and the on-vehicle terminal receives the symmetric key and stores the symmetric key into the secure storage area.

In step 12, a feedback result is received. The on-vehicle terminal feeds back a receipt result of the symmetric key to the server.

In step 13, the handheld terminal is informed of the receipt result of the symmetric key. The cloud server feeds back the receipt result of the symmetric key received from the on-vehicle terminal to the handheld terminal.

### Plaintext/ciphertext checked mechanism

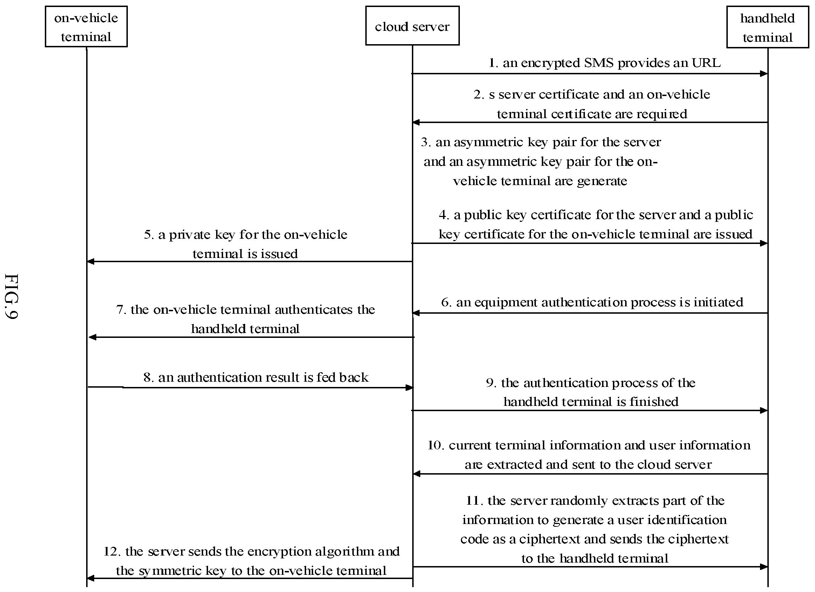

FIG. 9 is a flowchart illustrating a process of registering and authenticating a handheld terminal and a plaintext/ciphertext checking process according to an embodiment of the disclosure. Steps 1 to 9 in the processes are similar to those in the processes shown in FIG. 8.

In step 10, current terminal information and user information are extracted, and sent to the cloud server. The handheld terminal extracts the current terminal information and the user information (such as a MAC address for Bluetooth, an equipment fingerprint, a mobile phone number and the like) and sends the current terminal information and the user information to the cloud server through a secure encrypted communication link.

In step 11, the server randomly extracts part of the information to generate a user identification code as a ciphertext and sends the ciphertext to the handheld terminal. The cloud server extracts the terminal information and the user information sent by the handheld terminal, generates the ciphertext by adopting a certain encryption algorithm and a symmetric key, and sends the ciphertext to the handheld terminal.

In step 12, the server sends the encryption algorithm and the symmetric key to the on-vehicle terminal. The cloud server sends the encryption algorithm and the symmetric key for generating the ciphertext to the on-vehicle terminal. The on-vehicle terminal stores the key in the secure storage area.

So far, the bidirectional authentication process between the handheld terminal and the on-vehicle terminal is completed, and the symmetric key generated by the dynamic password is securely transmitted to the on-vehicle terminal. At this time, the symmetric key and the private key for the on-vehicle terminal are stored in the on-vehicle terminal. The handheld terminal stores the public key certificate for the cloud server, the public key certificate for the on-vehicle terminal, the root certificate and the multi-level certificate chain. But the symmetric key is not stored in the handheld terminal.

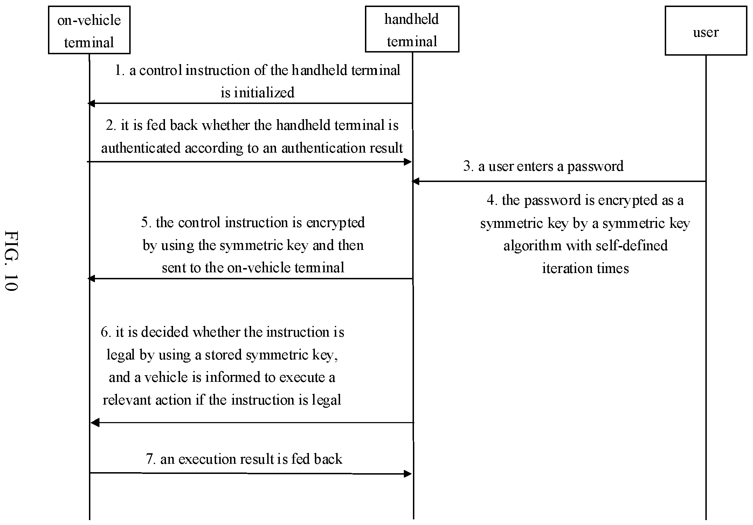

FIG. 10 is a flowchart illustrating that a handheld terminal uses a dynamic password to control an on-vehicle terminal according to an embodiment of the disclosure. The flowchart includes steps 1 to 7.

In step 1, a control instruction of the handheld terminal is initialized. The handheld terminal establishes point-to-point communication with the on-vehicle terminal in a communication mode including but not limited to Bluetooth, Zigbee, NFC, WIFI and the like, and the handheld terminal sends a request of initializing the control instruction by using an on-vehicle terminal certificate.

In step 2, it is fed back whether the handheld terminal is authenticated according to an authentication result. The on-vehicle terminal performs decryption by using a built-in private key according to a received message, decides whether the handheld terminal is an authenticated terminal, and feeds back a success result to the handheld terminal if the handheld terminal is the authenticated terminal.

In step 3, a user enters a password. An APP of the handheld terminal requires the user to enter the password which is a password that was confirmed when the handheld terminal was first bidirectionally authenticated.

In step 4, the password is encrypted as a symmetric key by a symmetric key algorithm with self-defined iteration times. The handheld terminal encrypts the password by the symmetric key algorithm with the self-defined iteration times to calculate the symmetric key. A main purpose of this step is to protect against dictionary attack or exhaustive attack by attackers.

One general purpose computer may try 10²⁰ keys per second, there is a total of 10¹⁰⁰ computers, each of the computers may work for 10²⁰ years, and it is assumed that there are 366 days in one year, 31622400 (366 × 24 × 60 × 60 = 31622400) seconds are provided each year, it can be seen that a total number of keys that can be tried when the computers are fully loaded to their operating lives is 10²⁰ × 10¹⁰⁰ × 10²⁰ × 31622400= 3.16224 × 10¹⁴⁷.

A total number of keys of length 512 bits (8 bytes) is 2⁵¹² = 1.340780 × 10¹⁵⁴. Therefore, 64 bytes of the key length is enough to prevent the exhaustive attack. A password length that can be memorized by a general user is 8 characters in length, namely 8 bytes. A main purpose of this step is lengthening the password to 64 bytes by a symmetric encryption algorithm with the self-defined iteration times, thereby achieving a purpose of absolute security. A reason why self-defined iteration is used instead of using a traditional password-based encryption (PBE) technology is that the PBE needs to store a random number (a term "salt" in PBE) in the handheld terminal, and if the random number is stolen, the dynamic password is easy to be stolen. A scheme of iterating the symmetric key for multiple times is that a calculation sequence and calculation times of symmetric algorithms such as AES, DES and the like are defined on at the handheld terminal, such as a combination of AES + DES + DES + AES and the like. Both the handheld terminal and the on-vehicle terminal know the calculation sequence and calculation times, but if an attacker needs to crack, the symmetric encryption algorithms such as AES/DES and the like need to be hacked, thus secure protection degree is obviously increased.

In step 5, the control instruction is encrypted by using the symmetric key and then the encrypted control instruction is sent to the on-vehicle terminal. The handheld terminal sends the control instruction encrypted by the symmetric key to the on-vehicle terminal.

In step 6, it is decided whether the instruction is legal by using a stored symmetric key, and a vehicle is informed to execute a relevant action if the instruction is legal. The on-vehicle terminal decrypts the instruction message by using a symmetric key which is stored securely, if the decryption is successful, the on-vehicle terminal decides that the instruction is a legal control request, and the on-vehicle terminal may send the instruction to other ECUs in the vehicle to execute an operation.

In step 7, an execution result is fed back. The on-vehicle terminal feeds back the execution result of the control instruction of the handheld terminal according to the execution result of the operation.

As far, all processes of controlling the on-vehicle terminal by the handheld terminal with the dynamic password are completed.

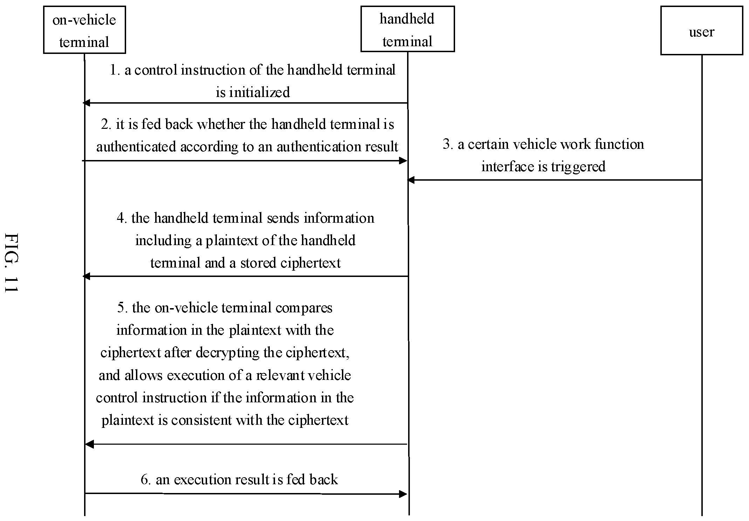

FIG. 11 is a flowchart illustrating that a handheld terminal controls an on-vehicle terminal by using a plaintext/ciphertext checking mechanism according to an embodiment of the disclosure. The flowchart includes steps 1 to 6.

In step 1, a control instruction of the handheld terminal is initialized. The handheld terminal establishes point-to-point communication with the on-vehicle terminal in a communication mode including but not limited to Bluetooth, Zigbee, NFC, WIFI and the like, and the handheld terminal sends a request of initializing the control instruction by using an on-vehicle terminal certificate.

In step 2, it is fed back whether the handheld terminal is authenticated according to an authentication result. The on-vehicle terminal performs decryption by using a built-in private key according to a received message, decides whether the handheld terminal is an authenticated terminal, and feeds back a success result to the handheld terminal if the handheld terminal is the authenticated terminal.

In step 3, a certain vehicle work function interface is triggered. The user initiates a triggering of a certain vehicle control function, which is generally realized by an APP of the handheld terminal.

In step 4, the handheld terminal sends information including a plaintext of the handheld terminal and a stored ciphertext. The handheld terminal sends a virtual key to the on-vehicle terminal, and the key includes the plaintext and the ciphertext. The plaintext is information of the handheld terminal and information related to a user, and the ciphertext is the previously stored encrypted information sent back by the server.

In step 5, the on-vehicle terminal compares information in the plaintext with the ciphertext after decrypting the ciphertext, and allows execution of a relevant vehicle control instruction if the information in the plaintext is consistent with the ciphertext. The on-vehicle terminal compares terminal information and user information extracted from the ciphertext with the relevant information in the plaintext after decrypting the ciphertext, and if the terminal information and the user information are matched with the related information in the plaintext, the on-vehicle considers that the handheld terminal is a legal terminal and allows the execution of the relevant vehicle control instruction.

In step 6, an execution result is fed back. The on-vehicle terminal sends the execution result back to the handheld terminal after executing the relevant control instruction.

As far, all processes of controlling the on-vehicle terminal by the handheld terminal with a plaintext/ ciphertext checking mechanism are completed.

The present disclosure mainly solves a problem of security in existing schemes. In the present disclosure, a symmetric key is not stored locally, and a problem of key storage in a security scheme is solved by efficiently generating a dynamic password. Through a bidirectional authentication process, a handheld terminal and an on-vehicle terminal establish one-to-one corresponding relationship, therefore, even if a certain handheld terminal is hacked, the number of affected on-vehicle terminal is only one, and security accidents cannot occur in batch. Aiming at a pain point of confidentiality in a vehicle virtual key scheme, two implementation schemes are creatively provided, neither of the schemes requires the handheld terminal to store a key, thus a defect of insufficient security in an implementation of other competitive products is overcome more perfectly.

The embodiment is not only used for realizing a virtual key function, but also applied to time-sharing leasing of vehicles or other shared product applications, such as sharing bicycles (vehicles) and the like. Firstly, a one-to-one corresponding relationship is established through bidirectional authentication of a handheld terminal, and then a temporary symmetric key is generated through a dynamic password to perform data encryption transmission.

Optionally, the key is stored in a secure storage area of a mobile phone, but this scheme requires an operating system (OS) of the mobile phone to support secure storage or illegally obtain a root authority of the mobile phone.

An embodiment of the present disclosure further provides a storage medium. Optionally, in the embodiment, the storage medium may be configured to store program codes for performing the following steps S1 to S2.

In step S1, a binding relationship with an on-vehicle terminal is established by using a NFC technology.

In step S2, the on-vehicle terminal is requested to perform identity authentication on a handheld terminal by using a symmetric key. The binding relationship indicates that the on-vehicle terminal corresponds to the handheld terminal in a one-to-one relationship.

Optionally, in the embodiment, the storage medium may include but is not limited to a U-disk, a Read Only Memory (ROM), a Random Access Memory (RAM), a removable hard disk, a magnetic disk, an optical disk, or various media capable of storing the program codes.

Optionally, in the embodiment, a processor executes, according to the program code stored in the storage medium, steps of establishing a binding relationship with the on-vehicle terminal by using the NFC technology, and requesting the on-vehicle terminal to perform the identity authentication on the handheld terminal by using the symmetric key, the binding relationship indicates that the on-vehicle terminal corresponds to the handheld terminal in a one-to-one relationship.

Optionally, details in the embodiment may refer to descriptions in the above embodiments and the optional implementation modes, and are not described herein again.

It will be apparent to those skilled in the art that the modules or steps of the present disclosure described above may be implemented by a general purpose computing device, they may be centralized on a single computing device or distributed across a network consisting of multiple computing devices, and optionally, they may be implemented by program codes executable by a computing device, such that they may be stored in a memory device and executed by the computing device, and in some cases, the steps shown or described may be executed out of order, the modules may be separately made as individual integrated circuit modules, or multiple modules or steps of the modules or the steps may be implemented as a single integrated circuit module. Thus, the present disclosure is not limited to any specific combination of hardware and software.

The above description is only the embodiments of the present disclosure and is not intended to limit the present disclosure, and various modifications and changes may be made to the present disclosure by those skilled in the art. Any modification, equivalent replacement, or improvement made within the spirit and principle of the present disclosure should be included in the protection scope of the present disclosure.

## Claims

1. An identity authentication method, comprising:
establishing a binding relationship with an on-vehicle terminal by using a near field communication technology; and
requesting the on-vehicle terminal to perform identity authentication on a handheld terminal by using a symmetric key,
wherein the binding relationship indicates that the on-vehicle terminal corresponds to the handheld terminal in one-to-one relationship.

2. The identity authentication method of claim 1, wherein the step of requesting the on-vehicle terminal to perform identity authentication on the handheld terminal by using the symmetric key comprises:
receiving a dynamic password;
generating a first symmetric key according to the dynamic password; and
sending the first symmetric key to the on-vehicle terminal, and locally deleting the symmetric key,
wherein the first symmetric key is used for the on-vehicle terminal to perform identity authentication on the handheld terminal.

3. The identity authentication method of claim 1, wherein the step of requesting the on-vehicle terminal to perform identity authentication on the handheld terminal by using the symmetric key comprises:
acquiring a plaintext key and a ciphertext key; and
sending the plaintext key and the ciphertext key to the on-vehicle terminal,
wherein the plaintext key and the ciphertext key are used for the on-vehicle terminal to perform identity authentication on the handheld terminal by using a second symmetric key, and the on-vehicle terminal stores the second symmetric key and a decryption manner of the ciphertext key.

4. The identity authentication method of claim 3, wherein before the step of establishing the binding relationship with the on-vehicle terminal by using the near field communication technology, the identity authentication method further comprises:
sending registration information to a cloud server through a cellular network; and
receiving the ciphertext key sent by the cloud server.

5. The identity authentication method of claim 1, wherein after the step of requesting the on-vehicle terminal to perform identity authentication on the handheld terminal by using the symmetric key, the identity authentication method further comprises:
sending a control instruction to the on-vehicle terminal after identity authentication is successful.

6. An identity authentication method applying to an on-vehicle terminal, comprises:
establishing a binding relationship with a handheld terminal by using a near field communication technology; and
performing identity authentication on the handheld terminal by using a symmetric key,
wherein the binding relationship indicates that the on-vehicle terminal corresponds to the handheld terminal in a one-to-one relationship.

7. The identity authentication method of claim 6, wherein the step of performing identity authentication on the handheld terminal by using the symmetric key comprises:
receiving a first symmetric key sent by the handheld terminal; and
performing identity authentication on the handheld terminal according to the first symmetric key.

8. The identity authentication method of claim 6, wherein the step of performing identity authentication on the handheld terminal by using the symmetric key comprises:
receiving a plaintext key and a ciphertext key sent by the handheld terminal; and
calling a second symmetric key stored locally to decrypt the ciphertext key, and performing identity authentication on the handheld terminal by comparing the decrypted ciphertext key with the plaintext key.

9. The identity authentication method of claim 6, wherein after the step of performing identity authentication on the handheld terminal by using the symmetric key, the identity authentication method further comprises:
controlling a vehicle where the on-vehicle terminal is positioned by using a control instruction sent by the handheld terminal after identity authentication is successful.

10. The identity authentication method of claim 6, wherein before the step of performing identity authentication on the handheld terminal by using the symmetric key, the identity authentication method further comprises:
receiving the symmetric key sent by a cloud server.

11. An identity authentication method, comprising:
receiving registration information from a handheld terminal;
generating a symmetric key according to the registration information; and
sending the symmetric key to an on-vehicle terminal,
wherein the symmetric key is used for the on-vehicle terminal to perform identity authentication on the handheld terminal.

12. The identity authentication method of claim 11, wherein after the step of receiving the registration information from the handheld terminal, the identity authentication method further comprises:
generating a ciphertext key according to the registration information; and
sending the ciphertext key to the handheld terminal.

13. An authentication device, comprising:
an establishing module configured to establish a binding relationship with an on-vehicle terminal by using a near field communication technology; and
a requesting module configured to request the on-vehicle terminal to perform identity authentication on a handheld terminal by using a symmetric key,
wherein the binding relationship indicates that the on-vehicle terminal corresponds to the handheld terminal in a one-to-one relationship.

14. An identity authentication device applied to an on-vehicle terminal, comprises:
an establishing module configured to establish a binding relationship with a handheld terminal by using a near field communication technology; and
an authenticating module configured to perform identity authentication on the handheld terminal by using a symmetric key,
wherein the binding relationship indicates that the on-vehicle terminal corresponds to the handheld terminal in a one-to-one relationship.

15. An identity authentication device, comprising:
a receiving module configured to receive registration information from a handheld terminal;
a generating module configured to generate a symmetric key according to the registration information; and
a sending module configured to send the symmetric key to an on-vehicle terminal,
wherein the symmetric key is used for the on-vehicle terminal to perform identity authentication on the handheld terminal.

16. A storage medium comprising a stored program, wherein the program, when executed by a processor, cause the processor to perform the method of any of claims 1 to 12.

17. A processor configured to execute a program, wherein when the program is executed by the processor, the processor performs the method of any of claims 1 to 12.
